# FASCICULE DE BREVET EUROPEEN

(11) **EP 1 781 526 B1**
(45) Date de publication et mention de la délivrance du brevet: **04.06.2008**
(21) Numéro de dépôt: 05797596.3
(22) Date de dépôt: 17.08.2005
(51) Int. Cl.: B62D 21/15

(54) **STRUCTURE POUR VEHICULE AUTOMOBILE ET VEHICULE EQUIPE D'UNE TELLE STRUCTURE**
STRUKTUR FÜR EIN MOTORFAHRZEUG UND FAHRZEUG DAMIT
STRUCTURE FOR MOTOR VEHICLE AND VEHICLE EQUIPPED WITH SAME

(30) Priorité: 20.08.2004 FR 0409048
(43) Date de publication de la demande: 09.05.2007
(73) Titulaire: RENAULT S.A.S., 92100 Boulogne Billancourt (FR)
(72) Inventeur: ROLLET, Rémi, F-91190 GIF-SUR-YVETTE (FR)
(74) Mandataire: Guyon, Rodolphe C.
(86) Numéro de dépôt international: PCT/FR2005/050675
(87) Numéro de publication internationale: WO 2006/021733

(56) Documents cités:
- EP-A- 0 926 049
- WO-A-03/066416

## Description

La présente invention se rapporte au domaine des structures pour véhicule automobile, du type comprenant un élément structurel, ainsi que des moyens de protection annexes à cet élément, placés par exemple en dessous du groupe moteur du véhicule, les moyens de protection comportant au moins un longeron muni de moyens d'engagement à une extrémité, la structure étant prévue pour renforcer la sécurité des passagers en cas de choc sur le véhicule.

L'invention concerne également les véhicules automobiles équipés d'une telle structure.

Dans ce domaine technique, plusieurs réalisations ont déjà été proposées.

Le document WO 03/066416 montre une telle réalisation selon le préambule de la revendication indépendante.

Parmi ces réalisations, on connaît une structure pour véhicule comprenant un châssis comportant un berceau, ainsi que des moyens de protection annexes au châssis comportant deux longerons dont les extrémités avant sont reliées par un élément de liaison du type traverse. Dans cette réalisation, le berceau est fixé aux autres éléments du châssis tels que des longerons principaux formant ossature du véhicule, tandis que les moyens de protection se situent en dessous du groupe moteur, à l'avant du véhicule.

Ainsi, le berceau et les moyens de protection constituant la structure sont prévus afin de préserver l'intégrité du véhicule en cas de choc sur l'avant du véhicule provoquant le déplacement des moyens de protection en direction du berceau, et disposent chacun d'une fonction distincte déterminée. En effet, le berceau, directement relié aux longerons principaux de l'ossature du véhicule, participe à la protection de l'habitacle en cas de choc. En revanche, les moyens de protection sont agencés pour protéger le groupe moteur, ainsi que pour éviter l'intrusion de certains éléments du groupe moteur à l'intérieur de l'habitacle, ce qui aurait pour effet d'accentuer les risques pour les personnes présentes à bord du véhicule.

Afin de renforcer la capacité d'absorption des chocs du véhicule et plus particulièrement de la partie du véhicule comportant le groupe moteur, les moyens de protection de la structure comprennent des longerons présentant un effort de ruine contrôlé, disposés de manière à prendre appui par leur extrémités arrière sur le berceau en cas de choc. Cette disposition spécifique permet le passage des efforts en direction de l'ossature du véhicule, et se caractérise par un renforcement de la sécurité des personnes présentes dans le véhicule en cas de choc.

Néanmoins, dans une telle structure, l'assemblage des moyens de protection avec le berceau est soumis à une contrainte importante. En effet, les longerons composant les moyens de protection ne doivent pas être en contact avec le berceau de la structure, afin de ne pas créer de voie de passage acoustique.

Dans la réalisation de l'art antérieur mentionnée ci-dessus, les longerons des moyens de protection sont agencés de manière à ne pas être en contact avec le berceau, et à être maintenus à proximité de ce dernier.

Afin d'améliorer encore le maintien des longerons pendant le choc, le berceau est muni d'un pion dont les formes correspondent à différents alésages formés dans le longeron. En cas de choc avant sur la structure provoquant le déplacement des moyens de protection en direction du berceau, les moyens de protection, guidés par l'interaction entre le pion et les alésages du berceau et des longerons, entrent en contact avec le berceau par l'intermédiaire de deux plaques d'appui situées respectivement sur les longerons et sur le berceau. Ainsi, le berceau et les moyens de protection ne sont pas initialement en contact de sorte qu'ils ne créent pas de voie de passage acoustique lors du roulage, alors qu'ils sont encastrés en cas de choc, de sorte qu'ils permettent un transfert des efforts du choc vers le berceau solidaire du châssis du véhicule. Toutefois, ce type de structure ne permet pas d'optimiser les prestations lors de petits chocs, dits chocs après vente, dont l'effort généré est inférieur à une valeur donnée, et pour lesquels il est souhaité de pouvoir réparer le véhicule. En l'occurrence, cette structure présente le risque d'impacter les berceaux lors de petits chocs, ce qui implique automatiquement son remplacement pour des raisons de sécurité.

L'invention a donc pour but de proposer une structure pour véhicule automobile, améliorant les structures connues au moins dans la gestion des petits chocs.

Plus particulièrement, le but de la présente invention est de proposer une structure pour véhicule ayant un fonctionnement acoustique en roulage et une absorption des efforts en cas de chocs violents qui soient au moins aussi performants que dans les structures antérieures, et qui ne génèrent pas d'impact sur le berceau lorsque l'importance du choc subi par le véhicule ne le nécessite pas.

En outre, l'invention a pour but de présenter un véhicule automobile équipé d'une telle structure.

Pour ce faire, l'invention a tout d'abord pour objet une structure pour véhicule automobile, la structure comprenant d'une part un élément structurel, comportant des moyens de guidage, et d'autre part des moyens de protection annexes à l'élément structurel comportant au moins un longeron muni d'un premier moyen d'engagement à l'intérieur du longeron et d'un deuxième moyen d'engagement à une extrémité de ce longeron, chaque longeron étant positionné de sorte que l'extrémité d'un moyen de guidage est située entre un premier et un second moyen d'engagement, de sorte que lors d'un choc sur la structure provoquant le déplacement des moyens de protection en direction de l'élément structurel, l'extrémité du moyen de guidage passe à travers le premier moyen d'engagement. Selon l'invention, au moins un premier moyen d'engagement est muni d'un obturateur qui est apte à bloquer un moyen de guidage en deçà d'un effort déterminé, et qui est apte à céder au-delà de cet effort pour laisser le passage à l'extrémité du moyen de guidage à travers le premier moyen d'engagement.

Avantageusement, la configuration spécifique proposée dans la structure selon l'invention permet d'éviter des impacts sur le berceau pour des petits chocs subis par le véhicule, tout en conservant les avantages du guidage du pion à travers les moyens d'engagement du berceau, qui permet d'améliorer avec succès le lien entre les longerons et le berceau durant les chocs violents subis par le véhicule. De cette manière, il est possible d'assurer le transfert des efforts depuis les longerons des moyens de protection en direction du berceau appartenant au châssis du véhicule; pendant toute la durée du choc, et selon tous les types de choc.

La sécurité globale du véhicule est alors renforcé, et les risques d'intrusion d'éléments du groupe moteur à l'intérieur de l'habitacle du véhicule sont amoindris.

Selon différentes caractéristiques de l'invention :
- l'obturateur est un élément plastique, cet élément plastique présentant une gorge de telle sorte que l'obturateur est rendu solidaire du deuxième moyen d'engagement par l'emmanchement du deuxième moyen d'engagement dans la gorge de l'obturateur,
- l'extrémité de l'obturateur situé en regard du moyen de guidage présente une forme complémentaire de celle du moyen de guidage,
- l'obturateur est cisaillé en deux parties par le moyen de guidage au-delà de l'effort déterminée, de sorte que la partie extérieure de l'obturateur située entre les deux moyens d'engagement et de diamètre supérieur au diamètre du premier moyen d'engagement reste entre les deux moyens d'engagement, le reste de l'obturateur suivant le mouvement du moyen de guidage,
- un jeu existe entre le moyen de protection et l'élément de structure lorsque l'obturateur bloque un moyen de guidage en deçà d'un effort déterminé.

Dans la structure selon l'invention, chaque longeron dispose à son extrémité de moyens d'engagement conçus pour coopérer avec des moyens de guidage complémentaires prévus sur le berceau. Ainsi, lors d'un choc sur la structure du véhicule, les moyens d'engagement s'engagent progressivement dans les moyens de guidage complémentaires, jusqu'au contact entre les plaques d'appui respectives des moyens de protection et du berceau. Une fois le contact obtenu, l'emboîtement entre les moyens d'engagement et les moyens de guidage complémentaires est réalisé, interdisant par conséquent tout mouvement postérieur entre les longerons et le berceau du châssis du véhicule, dont notamment les mouvements de rotation. De cette manière, le transfert des efforts en direction du châssis est assuré durant l'intégralité du choc. Cette caractéristique spécifique est obtenue en raison de la coopération particulière entre les moyens d'engagement et les moyens de guidage complémentaires, formant une liaison insensibles aux différents mouvements de rotations entre les longerons et le berceau, après l'entrée en contact de leurs plaques d'appui respectives.

Selon un mode de réalisation préféré de la présente invention, pour chaque longeron, les moyens d'engagement et les moyens de guidage complémentaires sont aptes à établir une liaison d'encastrement. De façon avantageuse, les liaisons entre les moyens d'engagement et les moyens de guidage complémentaires sont davantage renforcées, permettant par conséquent une sécurité supplémentaire pour le maintien des longerons des moyens de protection sur le berceau du châssis.

Préférentiellement, pour chaque longeron, les moyens d'engagement comprennent au moines un alésage, et les moyens de guidage complémentaires comprennent au moins un pion destiné à coopérer avec au moins un alésage des moyens d'engagement. Dans un tel cas, on peut alors prévoir que les moyens d'engagement comprennent un premier et un second alésages espacés l'un de l'autre et de diamètres respectifs d₁ et d₂, et que les moyens de guidage complémentaires comprennent un pion comportant une première et une seconde portions cylindriques de diamètres respectifs d₁ et d₂, les première et seconde portions cylindriques étant respectivement destinées à coopérer avec les premier et second alésages.

De manière préférée, pour chaque longeron, la première portion cylindrique du pion des moyens de guidage complémentaires se situe entre le premier et le second alésages des moyens d'engagement. De plus, le pion traverse le second alésage sans être en contact avec celui-ci. De cette façon, les pions des moyens de guidage complémentaires se situent à proximité des alésages sans être en contact avec ceux-ci, cet agencement particulier facilitant grandement leur engagement lors d'un choc sur la structure, sans créer de voie de passage acoustique.

D'autre part, l'invention a également pour objet un véhicule automobile comportant une structure telle que celle décrite ci-dessus.

D'autres avantages et caractéristiques de l'invention apparaîtront dans la description détaillée, non limitative, ci-dessous.

Cette description sera faite au regard des dessins annexés parmi lesquels :
- la figure 1 représente une vue en perspective d'une structure pour véhicule automobile selon un mode de réalisation préféré de l'invention ;
- la figure 2 représente une vue partielle en coupe d'un assemblage mis en oeuvre sur la structure de la figure 1, entre un longeron d'un moyen de protection et un élément structurel, avant un choc sur cette structure ;
- la figure 3 représente une vue partielle en coupe d'un assemblage mis en oeuvre sur la structure de la figure 1, entre un longeron d'un moyen de protection et un élément structurel, lors d' un choc de faible énergie sur cette structure ;
- la figure 4 représente une vue partielle en coupe d'un assemblage mis en oeuvre sur la structure de la figure 1, entre un longeron d'un moyen de protection et un élément structurel, après un choc violent sur cette structure.

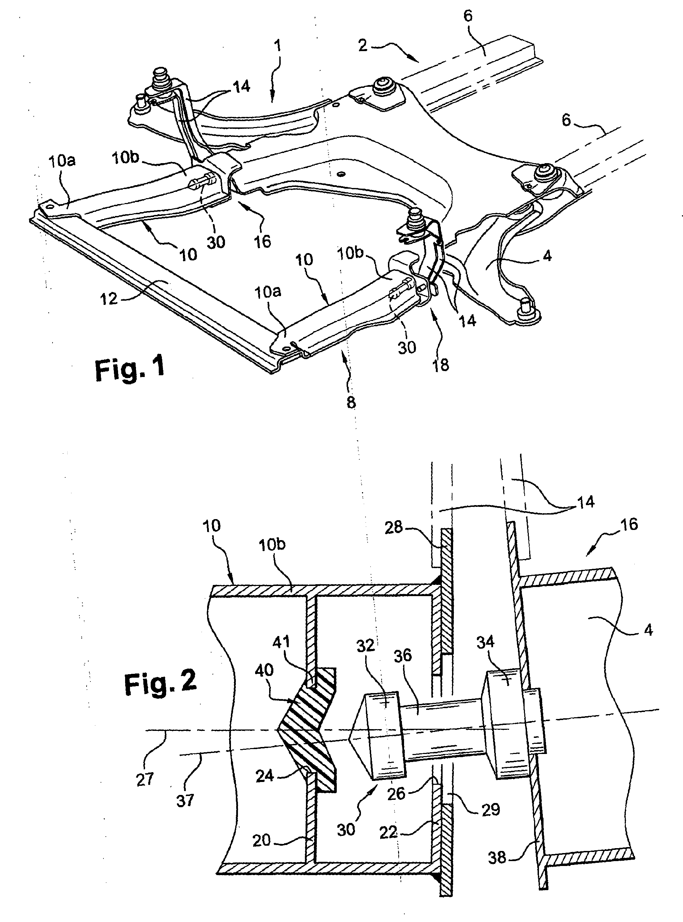

En référence à la figure 1, il est représenté une structure 1 pour un véhicule automobile (non représenté) selon un mode de réalisation préféré de la présente invention. La structure 1 comprend un châssis 2 comportant un berceau 4, ainsi que des longerons principaux 6 formant ossature du véhicule.

La structure 1 comprend également des moyens de protection 8, comportant de préférence deux longerons 10 disposés parallèlement, et reliés entre eux, à leurs extrémités avant 10a, par l'intermédiaire d'un élément de liaison 12 du type traverse. Les éléments 10,12 cités ci-dessus sont conçus de façon à présenter un effort de ruine élevé et contrôlé, en cas de choc sur le véhicule.

Dans ce mode de réalisation préféré, les moyens de protection 8 sont situés à l'avant du véhicule, et sont principalement destinés à travailler en parallèle des longerons principaux du véhicule. Le châssis 2 muni du berceau 4 est prévu pour assurer la sécurité de l'habitacle (non représenté) du véhicule. Il est disposé de manière à être à proximité des moyens de protection 8.

Les moyens de protection 8 sont reliés au berceau 4 du châssis 2 au moyen de bras 14, maintenant les extrémités arrière 10b des longerons 10 à proximité du berceau 4, sans être en contact avec celui-ci.

En référence à la figure 2, il est représenté une vue partielle en coupe d'un assemblage 16 mis en oeuvre sur la structure 1 de la figure 1, entre l'extrémité arrière 10b du longeron 10 des moyens de protection 8, et le berceau 4 du châssis 2. Notons que le second assemblage 18 prévu sur la structure 1 est identique à l'assemblage 16, et ne sera donc pas davantage décrit.

Comme on peut le voir sur cette figure, le longeron 10 comporte à son extrémité 10b, celle se situant à proximité du berceau 4, une première 20 et une seconde plaques 22 espacées l'une de l'autre, disposées sensiblement perpendiculairement à l'axe des longerons 10. Les plaques 20 et 22 sont traversées respectivement par un premier alésage 24 et par un second alésage 26 constituant les moyens d'engagement, dont l'axe 27 est confondu avec l'axe du longeron 10. Par ailleurs, une première plaque d'appui 28 est montée à l'extrémité 10b du longeron 10, perpendiculairement à l'axe du longeron 10. Notons que la première plaque d'appui 28 comporte un passage 29 de diamètre supérieur aux diamètres des alésages 24 et 26.

Le berceau 4 comprend des moyens de guidage complémentaires aux moyens d'engagement 24,26, ces moyens de guidage complémentaires étant essentiellement composés d'un pion 30, comportant une première portion cylindrique 32 et une seconde portion cylindrique 34, espacées l'une de l'autre et reliées entre elles par une troisième portion cylindrique 36 de diamètre inférieur. Notons que les première 32, seconde 36, et troisième portions cylindriques 34 ont un axe commun 37 sensiblement longitudinal. L'axe 27 des alésages 24 et 26 prévus sur les moyens d'engagement peut couper l'axe 37, et être par exemple légèrement incliné vers le bas en allant vers l'arrière. D'autre part, une seconde plaque d'appui 38 est montée sur le berceau 4, sensiblement perpendiculairement à l'axe 37, à proximité de la première plaque d'appui 28 montée sur le longeron 10.

Notons à titre indicatif qu'il serait possible de prévoir le pion 30 sur les longerons 10 et les alésages 24,26 sur le berceau 4, tout comme il serait également envisageable de prévoir une pluralité de pions 30 par assemblage 16.

Lorsque les moyens de protection 8 et le berceau 2 sont assemblés par l'intermédiaire des bras 14, la première portion cylindrique 32, de diamètre d₁ identique au diamètre du premier alésage 24, se situe entre les première et seconde plaques 20 et 22, portant les premier et second alésages 24 et 26. La troisième portion cylindrique 36, de diamètre inférieur au diamètre d₂ correspondant au diamètre du second alésage 26 et au diamètre de la seconde portion cylindrique 34, traverse le second alésage 26 et le passage 29 de la première plaque d'appui 28, sans être en contact avec ceux-ci. Ainsi, on évite de créer une voie de passage acoustique entre les longerons 10 des moyens de protection 8, et le berceau 4 du châssis 2.

Le premier moyen d'engagement 24 est muni d'un obturateur 40. Cet obturateur 40 est un élément à titre d'exemple plastique, de forme sensiblement symétrique de révolution. Une gorge 41 est réalisée radialement sur le pourtour de cet obturateur 40, la gorge 41 présentant des caractéristiques géométriques complémentaires de l'épaisseur la première plaque 20 de telle sorte que l'obturateur 40 est rendu solidaire du premier moyen d'engagement 24 par l'emmanchement de ce premier moyen d'engagement 24 dans la gorge 41 de l'obturateur 40.

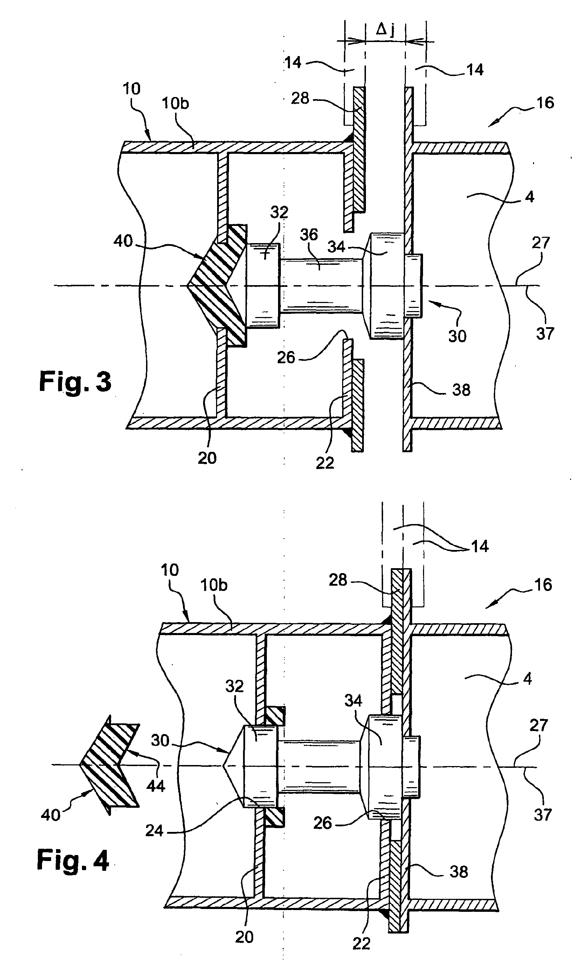

L'obturateur 40 offre un appui à l'un des moyens de guidage 30 lorsque l'effort induit par le choc correspond à un choc après vente. La pression exercée par le pion 30 sur l'obturateur 40 est alors insuffisante pour cisailler l'obturateur 40 ou le déloger de son emplacement dans la première plaque 20. Tel que représenté à la figure 3, la dimension du pion 30 et la distance entre le premier moyen d'engagement 24 et le second moyen d'engagement 26 sont calculées de sorte que l'appui du pion 30 sur l'obturateur 40 permettre d'éviter le contact entre les plaques d'appui 28 et 38. Ainsi, un choc après vente n'impacte pas le berceau 4 et seul le moyen de protection 8 est à remplacer en après vente.

Dans l'optique d'un appui de l'extrémité libre du pion 30 sur la base 44 de l'obturateur 40, cette base 44 présente une forme complémentaire de la forme de l'extrémité libre du moyen de guidage 30. A titre d'exemple représenté aux figures 2 à 4, l'extrémité libre du pion 30 peut présenter une forme conique mâle et la base 44 de l'obturateur une forme conique femelle. Il sera compris que tout autre agencement mâle et femelle conviendrait à la présente invention, les surfaces complémentaires de l'extrémité libre du pion 30 et de la base 44 devant être suffisamment grandes pour assurer le guidage du pion 30. Ce guidage du pion est facilité par le fait que l'obturateur 40 soit solidarisé sur le moyen d'engagement 24. Il est à noter que l'obturateur 40 pourrait être remplacé par un élément plastique situé sur l'extrémité du pion 30, et dont le diamètre est supérieur au diamètre du premier alésage 24, de sorte que cet élément plastique présente un point bloquant au passage de l'alésage 24. Toutefois, la précision du guidage du pion et la netteté du cisaillement qui en découle ne seraient pas aussi optimales que dans le cas d'un obturateur 40 solidaire du premier alésage 24.

Dans le cas de chocs violents subits par le véhicule, dans lesquels le pion 30 exerce un effort sur l'obturateur 40 plus important que l'effort relatif aux chocs après vente, l'obturateur ne doit pas être une entrave à l'encastrement des portions cylindriques 32 et 34 dans les alésages correspondants 24 et 26. La forme et le matériau de l'obturateur 40 permet un cisaillement en deux parties par le moyen de guidage 30 au-delà de la pression déterminée, de sorte que la partie de l'obturateur 40 située entre les deux moyens d'engagement 24, 26 et de diamètre supérieur au diamètre de l'alésage 26, reste entre les deux moyens d'engagement, le reste de l'obturateur étant éjecté vers l'avant du véhicule, suivant le mouvement du moyen de guidage 30, 32, 34.

A titre d'exemple, le moyen de guidage 30, 32, 34 est formé d'un pion décalottable 30, qui peut résister aux efforts après vente, inférieurs à un effort équivalent à 1,5 tonnes, mais qui subit un cisaillement pour des efforts supérieurs et en particuliers pour ceux correspondants à un choc violent, modélisés par un effort d'environ 4 tonnes.

Le cisaillement de l'obturateur 40 permet à la structure, pour les chocs violents, de retrouver le fonctionnement du pion étagé. Ce cisaillement est permis par sa forme et le matériau qui le constitue, et par la direction d'impact du pion 30 sur l'obturateur 40. Les formes complémentaires de la base 44 de l'obturateur 40 et de l'extrémité libre du pion 30 génèrent ainsi un alignement de l'axe 27 des alésages 24 et 26 et de l'axe 37 du moyen de guidage 30. La pression s'effectue dans le cylindre défini par le premier alésage 24, de sorte que la partie extérieure de l'obturateur 40 située entre les deux alésages 24, 26 et hors de ce cylindre, se désolidarise par cisaillement de la partie centrale de l'obturateur 40. Cette partie centrale est alors libre de mouvement par rapport au moyen d'engagement 24 et suit le mouvement généré par le pion 30.

Notons que, dans la possibilité citée plus haut de prévoir le pion 30 sur les longerons 10 et les alésages 24,26 sur le berceau 4, l'obturateur 40 est alors prévu à l'intérieur du berceau 4, toujours solidaire du premier alésage 24. Dans le cas d'une pluralité de pions 30 par assemblage 16, au moins un premier alésage 24 correspondant à un pion 30 devra être muni d'un obturateur 40 selon l'invention.

Lors d'un choc sur la structure 1 provoquant le déplacement des moyens de protection 8 en direction du berceau 4, chaque longeron 10 se déplace en direction du berceau 4, sous l'effet du choc survenu au niveau de l'élément de liaison 12 des moyens de protection 8. Notons que dans le cas précédemment évoqué d'un axe 27 des alésages 24 et 26 incliné par rapport à l'axe 37 des pions 30, les longerons 10 se redressent sensiblement, pendant le déplacement des longerons 10 en direction du berceau 4, jusqu'à avoir l'axe 27 des alésages 24 et 26 confondu avec l'axe 37 des pions 30.

Ainsi, quelques instants après le début du choc, l'extrémité libre du pion 30 s'engage dans la forme complémentaire de la base 44 de l'obturateur 40. Lorsque l'obturateur 40 est en appui contre le pion 30, le berceau 4 et le longeron 10 ne se touchent pas. Cette situation, représentée à la figure 3, est l'état final de la structure lorsque le choc est un choc après vente, c'est-à-dire un choc subi par le véhicule à vitesse limitée. Cette situation peut également être un état intermédiaire lorsque le choc subi par le véhicule est un choc violent à grande vitesse. Dans ce cas, la face d'appui proposée par l'obturateur 40 ne résiste pas à l'effort exercée par le pion 30 contre le déplacement du longeron 10 vers le berceau 4, et l'obturateur 40 est cisaillé sous cette pression. Le longeron 10 est alors libre de continuer sa progression vers le berceau 4, jusqu'à ce que les deux faces d'appui 28 et 38 soient en contact, tel que représenté à la figure 4.

Les plaques d'appui 28 et 38 sont initialement disposées de manière à ce que, lorsqu'elles entrent en contact et qu'elles stoppent le mouvement relatif des longerons 10 par rapport au berceau 4, la seconde portion cylindrique 34 se situe dans le second alésage 26, et l'obturateur 40 est cisaillé pour permettre à la première portion cylindrique 32 de se situer dans le premier alésage 24. En effet, de façon simultanée, le premier alésage 24 s'emboîte dans la première portion cylindrique 32 de même diamètre d₁, tandis que le second alésage 26 s'emboîte dans la seconde portion cylindrique 34 de même diamètre d₂, supérieur à d₁.

De cette façon, aucun mouvement ultérieur n'est autorisé entre les longerons 10 et le berceau 4, cette caractéristique assurant par conséquent le passage des efforts provenant du choc en direction du berceau 4 appartenant au châssis 2, pendant toute la durée de ce choc. Dans le mode de réalisation préféré présenté, les moyens de guidage complémentaires 30,32,34 disposent d'un pion 30 muni de deux portions cylindriques 32 et 34 espacées l'une de l'autre, afin d'éviter les mouvements de rotation des longerons 10 par rapport au berceau 4, selon des axes perpendiculaires aux axes des longerons 10. Néanmoins, une autre possibilité pour les moyens d'engagement et les moyens de guidage complémentaires peut consister en une seule portion cylindrique, coopérant avec un seul alésage. L'obturateur 40 est alors solidaire de cet alésage unique.

Il est également précisé que la liaison obtenue entre les moyens d'engagement 24,26 et les moyens de guidage complémentaires 30,32,34 peut être une liaison d'encastrement. Pour se prévaloir d'un tel type de liaison, les diamètres des premier et second alésages 24,26 et des première et seconde portions cylindriques 30,32,34 doivent être ajustés en conséquence. De cette manière, les risques de mouvement de rotation entre les longerons 10 et le berceau 4, par exemple selon un axe parallèle à l'axe des longerons 10, sont fortement diminués.

Bien entendu, diverses modifications peuvent être apportées par l'homme du métier à la structure 1 et au véhicule automobile qui viennent d'être décrits, uniquement à titre d'exemples non limitatifs. A titre d'exemple, l'obturateur peut présenter une forme particulière ou être formé d'un matériau distinct du plastique, sans que le contexte de l'invention soit modifié.

## Revendications

1. Structure (1) pour véhicule automobile, la structure (1) comprenant d'une part un élément structurel (4), comportant des moyens de guidage (30,32,34), et d'autre part des moyens de protection (8) annexes à l'élément structurel (4) comportant au moins un longeron (10) muni d'un premier moyen d'engagement (24) à l'intérieur du longeron (10) et d'un deuxième moyen d'engagement (26) à une extrémité (10b) de ce longeron, chaque longeron (10) étant positionné de sorte que l'extrémité d'un moyen de guidage est située entre un premier (24) et un second (26) moyen d'engagement, de sorte que lors d'un choc sur la structure (1) provoquant le déplacement des moyens de protection (8) en direction de l'élément structurel (4), l'extrémité du moyen de guidage passe à travers le premier moyen d'engagement (24),
**caractérisée en ce qu'**au moins un premier moyen d'engagement (24) est muni d'un obturateur (40) qui est apte à bloquer un moyen de guidage (30,32,34) en deçà d'une pression déterminée, et qui est apte à céder au-delà de cette pression pour laisser le passage à l'extrémité du moyen de guidage à travers le premier moyen d'engagement (24).

2. Structure (1) selon la revendication 1, **caractérisé en ce que** l'obturateur est un élément présentant une gorge (41) de telle sorte que l'obturateur (40) est rendu solidaire du premier moyen d'engagement (24) par l'emmanchement de ce premier moyen d'engagement (24) dans la gorge (41) de l'obturateur (40).

3. Structure (1) selon la revendication 1 ou 2, **caractérisé en ce que** la base (44) de l'obturateur (40) situé en regard du moyen de guidage (30, 32, 34) présente une forme complémentaire de celle l'extrémité du moyen de guidage (30, 32, 34).

4. Structure (1) selon l'une des revendications précédentes, **caractérisé en ce que** l'obturateur (40) est cisaillé en deux parties par le moyen de guidage (30, 32, 34) au-delà de la pression déterminée, de sorte que la partie extérieure de l'obturateur (40) située entre les deux moyens d'engagement (24, 26) et de diamètre supérieur au diamètre du premier moyen d'engagement (24) reste entre les deux moyens d'engagement, la partie centrale de l'obturateur (40) suivant le mouvement du moyen de guidage (30, 32, 34).

5. Structure (1) selon l'une des revendications précédentes, **caractérisé en ce qu'**un jeu (Δj) existe entre le moyen de protection (8) et l'élément de structure (4) lorsque l'obturateur (40) bloque un moyen de guidage (30,32,34) en deçà d'une pression déterminée.

6. Structure (1) selon l'une des revendications précédentes, **caractérisée en ce que** pour chaque longeron (10), les moyens d'engagement (24,26) et les moyens de guidage complémentaires (30,32,34) sont aptes à établir une liaison d'encastrement.

7. Structure (1) selon l'une des revendications précédentes, **caractérisée en ce que** pour chaque longeron (10), les moyens d'engagement (24,26) comprennent au moins un alésage, et **en ce que** les moyens de guidage complémentaires (30,32,34) comprennent au moins un pion (30) destiné à coopérer avec au moins un alésage des moyens d'engagement (24,26).

8. Structure (1) selon la revendication 7, **caractérisée en ce que** pour chaque longeron (10), les moyens d'engagement (24,26) comprennent un premier (24) et un second alésages (26) espacés l'un de l'autre et de diamètres respectifs d₁ et d₂, et **en ce que** les moyens de guidage complémentaires (30,32,34) comprennent un pion (30) comportant une première (32) et une seconde portions cylindriques (34) de diamètres respectifs d₁ et d₂, lesdites première (32) et seconde portions cylindriques (34) étant respectivement destinées à coopérer avec lesdits premier (24) et second alésages (26).

9. Structure (1) selon la revendication 8, **caractérisée en ce que** les moyens de protection (8) et l'élément structurel (4) sont positionnés de manière à ce que pour chaque longeron (10), la première portion cylindrique (32) du pion (30) des moyens de guidage complémentaires (30,32,34) se situe entre le premier (24) et le second alésages (26) des moyens d'engagement (24,26), et **en ce que** le pion (30) traverse ledit second alésage (26) sans être en contact avec celui-ci.

10. Véhicule automobile, **caractérisé en ce qu'**il comporte une structure (1) selon l'une quelconque des revendications précédentes.

## Claims

1. Structure (1) for a motor vehicle, the structure (1) comprising on the one hand a structural element (4), including guiding means (30,32,34), and on the other hand protective means (8) attached to the structural element (4) including at least one side member (10) provided with a first engaging means (24) inside the side member (10) and a second engaging means (26) at one end (10b) of this side member, each side member (10) being positioned so that the end of one guiding means is located between a first (24) and a second (26) engaging means, so that in the event of an impact on the structure (1) causing the displacement of the protective means (8) in the direction of the structural element (4), the end of the guiding means passes through the first engaging means (24), **characterized in that** at least one first engaging means (24) is provided with plug (40) which is designed to stop a guiding means (30,32,34) below a set force, and which is designed to yield above this force to allow the end of the guiding means to pass through the first engaging means (24).

2. Structure (1) according to Claim 1, **characterized in that** the plug is an element having a groove (41) so that the plug (40) is connected to the first engaging means (24) by the fitting of this first engaging means (24) in the groove (41) of the plug (40).

3. Structure (1) according to Claim 1 or 2, **characterized in that** the base (44) of the plug (40) located facing the guiding means (30,32,34) has a shape complementary to that of the end of the guiding means (30,32,34).

4. Structure (1) according to one of the preceding claims, **characterized in that** the plug (40) is sheared in two portions by the guiding means (30,32,34) above the set force, so that the outer portion of the plug (40) located between the two engaging means (24,26) and having a diameter greater than the diameter of the first engaging means (24) remains between the two engaging means, the central portion of the plug (40) following the movement of the guiding means (30,32,34).

5. Structure (1) according to one of the preceding claims, **characterized in that** there is a clearance (Δj) between the protective means (8) and the structural element (4) when the plug (40) stops a guiding means (30,32,34) below a set force.

6. Structure (1) according to one of the preceding claims, **characterized in that** for each side member (10), the engaging means (24,26) and the complementary guiding means (30,32,34) are designed to establish a tight-fitting connection.

7. Structure (1) according to one of the preceding claims, **characterized in that** for each side member (10), the engaging means (24,26) comprise at least one hole, and **in that** the complementary guiding means (30,32,34) comprise at least one guide pin (30) intended to cooperate with at least one hole of the engaging means (24,26).

8. Structure (1) according to Claim 7, **characterized in that** for each side member (10), the engaging means (24,26) comprise a first (24) and a second hole (26) spaced one from the other and of respective diameters d₁ and d₂, and **in that** the complementary guiding means (30,32,34) comprise a guide pin (30) including first (32) and second cylindrical portions (34) of respective diameters d₁ and d₂, the said first (32) and second cylindrical portions (34) being respectively intended to cooperate with the said first (24) and second holes (26).

9. Structure (1) according to Claim 8, **characterized in that** the protective means (8) and the structural element (4) are positioned so that for each side member (10), the first cylindrical portion (32) of the guide pin (30) of the complementary guiding means (30,32,34) is located between the first (24) and the second holes (26) of the engaging means (24,26), and **in that** the guide pin (30) passes through the said second hole (26) without being in contact with it.

10. Motor vehicle, **characterized in that** it includes a structure (1) according to any one of the preceding claims.

## Patentansprüche

1. Struktur (1) für ein Kraftfahrzeug, wobei die Struktur (1) einerseits ein Strukturelement (4), das Führungsmittel (30, 32, 34) aufweist, und andererseits Schutzmittel (8) aufweist, die an das Strukturelement (4) angefügt sind und mindestens einen Längsträger (10) aufweisen, der mit mindestens einem ersten Einsteckmittel (24) im Inneren des Längsträgers (10) und einem zweiten Einsteckmittel (26) an einem Ende (10b) dieses Längsträgers versehen ist, wobei jeder Längsträger (10) so positioniert ist, dass ein Ende eines Führungsmittels sich zwischen einem ersten (24) und einem zweiten (26) Einsteckmittel befindet, so dass bei einem Stoß auf die Struktur (1), der die Verschiebung der Schutzmittel (8) in Richtung des Strukturelements (4) bewirkt, das Ende des Führungsmittels durch das erste Einsteckmittel (24) geht,
**dadurch gekennzeichnet, dass** mindestens ein erstes Einsteckmittel (24) mit einer Verschlussvorrichtung (40) versehen ist, die in der Lage ist, ein Führungsmittel (30, 32, 34) unterhalb eines bestimmten Drucks zu blockieren, und die in der Lage ist, oberhalb dieses Drucks nachzugeben, um das Ende des Führungsmittels durch das erste Einsteckmittel (24) durchzulassen.

2. Struktur (1) nach Anspruch 1, **dadurch gekennzeichnet, dass** die Verschlussvorrichtung ein Element ist, das eine Kehle (41) aufweist, so dass die Verschlussvorrichtung (40) durch Einschieben des ersten Einsteckmittels (24) in die Kehle (41) der Verschlussvorrichtung (40) fest mit diesem ersten Einsteckmittel (24) verbunden wird.

3. Struktur (1) nach Anspruch 1 oder 2, **dadurch gekennzeichnet, dass** die Basis (44) der Verschlussvorrichtung (40), die sich gegenüber dem Führungsmittel (30, 32, 34) befindet, eine Form komplementär zu derjenigen des Endes des Führungsmittels (30, 32, 34) hat.

4. Struktur (1) nach einem der vorhergehenden Ansprüche, **dadurch gekennzeichnet, dass** die Verschlussvorrichtung (40) vom Führungsmittel (30, 32, 34) oberhalb des bestimmten Drucks in zwei Teile geschnitten wird, derart, dass der äußere Teil der Verschlussvorrichtung (40), der sich zwischen den zwei Einsteckmitteln (24, 26) befindet und dessen Durchmesser größer ist als der Durchmesser des ersten Einsteckmittels (24), zwischen den zwei Einsteckmitteln bleibt, während der zentrale Teil der Verschlussvorrichtung (40) der Bewegung des Führungsmittels (30, 32, 34) folgt.

5. Struktur (1) nach einem der vorhergehenden Ansprüche, **dadurch gekennzeichnet, dass** ein Spiel (Δj) zwischen dem Schutzmittel (8) und dem Strukturelement (4) vorhanden ist, wenn die Verschlussvorrichtung (40) ein Führungsmittel (30, 32, 34) unterhalb eines bestimmten Drucks blockiert.

6. Struktur (1) nach einem der vorhergehenden Ansprüche, **dadurch gekennzeichnet, dass** für jeden Längsträger (10) die Einsteckmittel (24, 26) und die komplementären Führungsmittel (30, 32, 34) in der Lage sind, eine Einbindungsverbindung herzustellen.

7. Struktur (1) nach einem der vorhergehenden Ansprüche, **dadurch gekennzeichnet, dass** für jeden Längsträger (10) die Einsteckmittel (24, 26) mindestens eine Bohrung aufweisen, und dass die komplementären Führungsmittel (30, 32, 34) mindestens einen Zapfen (30) aufweisen, der dazu bestimmt ist, mit mindestens einer Bohrung der Einsteckmittel (24, 26) zusammenzuwirken.

8. Struktur (1) nach Anspruch 7, **dadurch gekennzeichnet, dass** für jeden Längsträger (10) die Einsteckmittel (24, 26) eine erste (24) und eine zweite Bohrung (26) aufweisen, die einen Abstand zueinander und einen Durchmesser d₁ bzw. d₂ haben, und dass die komplementären Führungsmittel (30, 32, 34) einen Zapfen (30) aufweisen, der einen ersten (32) und einen zweiten zylindrischen Abschnitt (34) mit Durchmessern d₁ bzw. d₂ besitzt, wobei der erste (32) und der zweite zylindrische Abschnitt (34) dazu bestimmt sind, mit der ersten (24) bzw. zweiten Bohrung (26) zusammenzuwirken.

9. Struktur (1) nach Anspruch 8, **dadurch gekennzeichnet, dass** die Schutzmittel (8) und das Strukturelement (4) so positioniert sind, dass für jeden Längsträger (10) der erste zylindrische Abschnitt (32) des Zapfens (30) der komplementären Führungsmittel (30, 32, 34) sich zwischen der ersten (24) und der zweiten Bohrung (26) der Einsteckmittel (24, 26) befindet, und dass der Zapfen (30) die zweite Bohrung (26) durchquert, ohne mit dieser in Kontakt zu sein.

10. Kraftfahrzeug, **dadurch gekennzeichnet, dass** es eine Struktur (1) nach einem der vorhergehenden Ansprüche aufweist.
